# EUROPEAN PATENT SPECIFICATION

(11) **EP 3 506 444 B1**
(45) Date of publication and mention of the grant of the patent: **02.02.2022**
(21) Application number: 18248047.5
(22) Date of filing: 27.12.2018
(51) Int. Cl.: H02G 3/12

(54) **SURFACE MOUNTING DEVICE**
OBERFLÄCHENMONTAGEVORRICHTUNG
DISPOSITIF DE MONTAGE EN SURFACE

(30) Priority: 30.12.2017 BE 201706039
(43) Date of publication of application: 03.07.2019
(73) Proprietor: Niko NV, 9100 Sint-Niklaas (BE)
(72) Inventor: COOREMAN, Tom, 9310 Meldert (Aalst) (BE)
(74) Representative: DenK iP bv

(56) References cited:
- EP-A1- 1 703 605
- DE-B3-102009 060 378
- FR-A1- 2 744 849
- FR-A1- 2 866 758

## Description

### Field of the invention

The present invention relates to the field of electrical outlet boxes of the types mounted in walls, floors, ceilings or the like to receive the ends of electrical conductors, and to act as a point of mounting of functional insert such as a socket, a switch or an electrical receptacle providing ready access to electrical service. Typically, the mounting of the functional insert is done by means of a mounting device. The present invention more specifically relates to such mounting devices, comprising a bridge and claws.

### Background of the invention

Electric networks in structures such as buildings are usually insulated and not reachable, inside of walls and floors for example. In order to connect devices to the electric network, outlets are needed. These outlets require compliance with strict safety regulations and standards, which do not allow a great freedom of design.

Outlets usually include an electrical outlet box provided in a wall, floor, ceiling etc. Ends of conductors (electrical or data conductors) are brought from the wall to the inside of the electrical outlet box, where they are connected to a functional insert such as an electrical socket, a network socket, a wall-mounted device such as a sensor and/or thermostat, etc. The connection is electrical on the one hand, and mechanical on the other hand. The mechanical connection is provided by a mounting device attached in the electrical outlet box. The mounting device needs to be anchored to the electrical outlet box very firmly; the anchoring must be stronger than any force that could be applied to it (e.g. the force needed to pull a plug out of its socket). However, design, installation and manufacture requirements do not allow providing anchorage by deep rivets or wall screws or the like. The mounting device should be modular and easy to install.

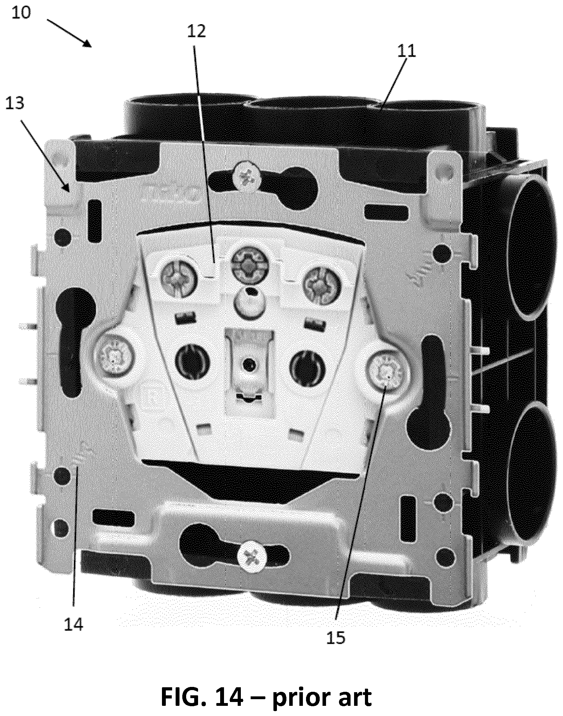

FIG 14 illustrates a prior art outlet 10, comprising an electrical outlet box 11 adapted to be mounted in a wall, floor, ceiling or the like. A functional insert 12 is attached into the electrical outlet box 11 by means of a mounting device 13. The functional insert 12 may be attached to the mounting device 13, before or after attachment of the mounting device 13 into the electrical outlet box 11.

Typically, and also in the illustration of FIG 14, the mounting device 13 comprises a bridge 14 and claws that are detachable from the bridge 14. The claws are attached to the bridge via screws 15. The claws hold to the inside walls of the electrical outlet box 11, providing anchoring to the box 11. This, however, increases the number of elements and loose pieces. The engagement of the separate pieces is a time-consuming process that usually has to be performed by the end user making the installation. A fast attachment and easy installation would provide a timing advantage. Additionally, mounting devices should be compact so they do not take a lot of volume inside the electrical outlet box, so as to leave as much space as possible for the functional insert and the conductors.

However, due to the safety standards, it is difficult to obtain a system with fast attachment and easy installation, and it is not possible to simply scale down the system so as to be more compact, because the bridge must include several other features such as grounding, screw and plug-in terminals, banana-shaped and panel screw holes, attachment means for bezels, etc., while at the same time complying with strength requirements. Moreover, the bridge must be capable of harboring different functional inserts, so it is not possible to simply reduce its size.

FR 2 866 758 A1 discloses a claw for fixing a bridge to an electrical box or the like. The claw can be partially assembled and stored, providing an easy way of mounting it to a bridge. However, the claw needs to be held during installation, and it may be prone to failures. The flexibility of design is constrained due to the safety standards.

EP 1 703 605 A1 discloses a sunken module including a claw and base plate with walls and a groove for engaging the claw. Excavations and recesses are present in the groove to guide protrusions provided on the claw and to snap thickenings of the claw, for easy mounting of the bolts in the claw. The claw design is constrained by safety standards as well.

FR 2 744 849 A1 discloses a slidable claw mounted on the side wall of an electrical box or cabinet, so the cabinet can be fixed to a wall. The slidable claw has reinforcement ribs. However, an electrical apparatus still requires attachment to the box, which is not provided by the slidable claw.

DE 10 2009 060378 B3 discloses a functional plate including latching devices which ensure fixation of a claw during installation. However, the functional plate is found on the electrical apparatus itself. Using a standard apparatus without such devices does not guarantee claw fixation for fixing the bridge to the box.

### Summary of the invention

It is an object of embodiments of the present invention to provide a compact mounting device for anchoring a functional insert into an electrical outlet box.

The present invention provides a mounting device for installing an electrical connection box in a wall, as defined by the appended claim 1.

In some embodiments, the aperture is adapted so that the bracing system contacts the bridge substantially only on the clamping zone of the bridge upon actuation of the bracing system. It is an advantage of embodiments of the present invention that claws can be positioned on a bridge close to each other, without reducing the area of the center of the bridge.

In some embodiments of the present invention, the aperture is adapted in size and shape so that a claw can be attached to the bridge, while being allowed to tilt with respect to the bridge. It is an advantage of embodiments of the present invention that storage of a bridge with partially assembled claws is easy and with reduced space.

In some embodiments of the present invention, the aperture is a straight slit or a keyhole for allowing passage of at least part of a bracing system. It is an advantage of embodiments of the present invention that the bridge allows for a fast and easy claw engaging.

The proximal portion of the claw comprises an attaching portion for engaging a bracing system and attaching the claw to a bridge. The attaching portion may include a slot or gap suitable for removably fitting the bracing system in an assembled form. It is an advantage of embodiments of the present invention that the bracing system can be attached easily and fast to the claw, with no need to assemble the bracing system on the claw, thus reducing time during installation.

In some embodiments of the present invention, the at least one claw comprises at least one elongated arm where the proximal portion and a distal portion, opposite to the proximal portion, are included. The distal portion comprises anchoring means for anchoring to a mounting box, for example. The rib may be included in the at least one elongated arm, extending longitudinally towards the proximal portion.

The at least one elongated arm has a longitudinal direction and the rib may be oriented along the longitudinal direction. It may be positioned such that it extends towards the proximal portion of the arm. It may be positioned closer to the proximal portion of the arm.

The at least one claw may comprise two elongated arms comprising a proximal portion and an opposite distal portion comprising anchoring means. Both elongated arms may comprise a rib extending longitudinally towards the proximal portion.

In some embodiments of the present invention, the at least one claw further includes a structural element extending longitudinally between the arms away from the proximal portion at the side of the arm opposite to the anchoring means. It is an advantage of embodiments of the present invention that the structural element is not in contact with the surface on which the claw is attached, thus improving the flexibility of design and attachment of the claw.

In some embodiments of the present invention the at least one claw comprises a bracing system including a clamping nut, where at least one arm and the nut are adapted to fit for avoiding rotation of the nut. It is an advantage of embodiments of the present invention that actuation of the bracing system is facilitated, which improves the clamping of the at least one claw to the bridge. In particular embodiments, at least one arm of the at least one claw includes a longitudinal groove, and the shape of the clamping nut is adapted to fit the longitudinal groove of the arm or arms. For example, the nut can include a protrusion, or the edges of the nut may be trimmed (e.g. the corners of a square nut may be cut away) so the nut engages and fits the groove. It is a further advantage of embodiments of the present invention that the opening of the at least one claw (due to release of the bracing system from the claw, for example) is prevented by the fact that the nut clicks into the groove.

In embodiments of the present invention, the at least one claw including the longitudinal groove, the rib and the groove may be provided at opposite sides of the arm, and the profile of the rib of the arm may be complementary to the profile of the groove of that arm. It is an advantage of embodiments of the present invention that the rib and the groove can be manufactured simultaneously, e.g. by shaping or stamping.

The claw comprises a locking system suitable for engaging a corresponding locking system in a bridge, for locking the position of the claw with respect to said bridge, when assembled. It is an advantage of embodiments of the present invention that the position of the at least one claw can be locked with respect to the bridge for installation of the mounting device.

The locking system comprises a depression, for example on the at least one arm of the at least one claw, or on both arms thereof, on the rib, suitable for fitting an alignment tooth on a bridge. It is an advantage that the locking system can be easily provided on the at least one claw.

In some embodiments of the present invention, the attaching portion of the bridge is adapted in size and shape so that a clamping nut of a bracing system of the at least one claw to be attached to the bridge fits within the aperture of the attaching portion. It is an advantage of embodiments of the present invention that the nut can be held in position, avoiding rotation, while actuating the bracing system.

The bridge further comprises a locking system including at least one tooth for alignment, and locking, of the at least one claw to be attached to the bridge. It is an advantage of embodiments of the present invention that the bridge allows to lock the position of the at least one claw for facilitating assembly in a surface, e.g. in an electrical outlet box within a surface such as a wall.

The at least one tooth comprises a jut at its tip, for improving claw locking. It is an advantage of embodiments of the present invention that the at least one claw can be snapped on the bridge without the need to use rubber or elastics.

It is an advantage of embodiments of the present invention that a mounting device can be obtained with a compact clamping system and attachment system to an electrical outlet box, where the available space for electrical components is not reduced.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG 1 illustrates an embodiment of a claw which may be used in a mounting device in accordance with embodiments of the present invention.
FIG 2 illustrates in detail a bracing system included in a claw, and the interaction of the bracing system with a bridge, in accordance with embodiments of the present invention.
FIG 3 illustrates a detail of an attaching portion of a claw, not part of the claimed invention (a rib is not shown).
FIG 4 illustrates a detail of an alternative attaching portion of a claw, in accordance with embodiments of the present invention.
FIG 5 illustrates a portion of a bracing system (a nut), in accordance with embodiments of the present invention.
FIG 6 shows the cross section of the attaching portion of the claw, in accordance with embodiments of the present invention, through the dashed line shown in FIG 4.
FIG 7 shows a bridge which may be used in a mounting device in accordance with embodiments of the present invention, together with a detail of different alternative apertures and attaching portions of the bridge in the two lower drawings.
FIG 8 shows three steps of the tilt of a claw allowed by the aperture of a bridge, in accordance with embodiments of the present invention.
FIG 9 shows two different apertures of a bridge, in accordance with embodiments of the present invention.
FIG 10 shows a detail of a locking system of a bridge and a locking system of a claw, which together form a locking assembly, in accordance with embodiments of the present invention.
FIG 11 shows a locking assembly formed by interacting locking systems of a claw and a bridge, in accordance with embodiments of the present invention.
FIG 12 shows an alternative locking assembly, in accordance with embodiments of the present invention.
FIG 13 shows the lateral view of a mounting device formed by a bridge and two claws, in accordance with embodiments of the present invention.
FIG 14 illustrates a prior art electrical outlet box with a functional insert mounted therein by means of a mounting device comprising a bridge and claws.

The drawings are only schematic and are non-limiting. In the drawings, the size of some of the elements may be exaggerated and not drawn on scale for illustrative purposes.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Furthermore, any of the claimed embodiments can be used in any combination.

Mounting devices for anchoring a functional insert into an electrical outlet box in a building structure such as a wall, floor, ceiling, column or the like, usually comprise a bridge and claws. Usually there are two claws at opposite sides of the bridge, for fixing the position of the mounting device in the electrical outlet box. The standards are very strict and the design must comply with regulations regarding e.g. size and strength. The present invention provides a claw, a bridge and a mounting device comprising such claw and bridge which can allow a reduction of size of an electrical outlet box, without reducing its useful area for harboring a functional insert, and while still complying with security and resilience standards. This is obtained by reducing the size of the claw on the one hand, and by adapting the clamping of the bridge and claw on the other hand, so that the distance between claws can be reduced.

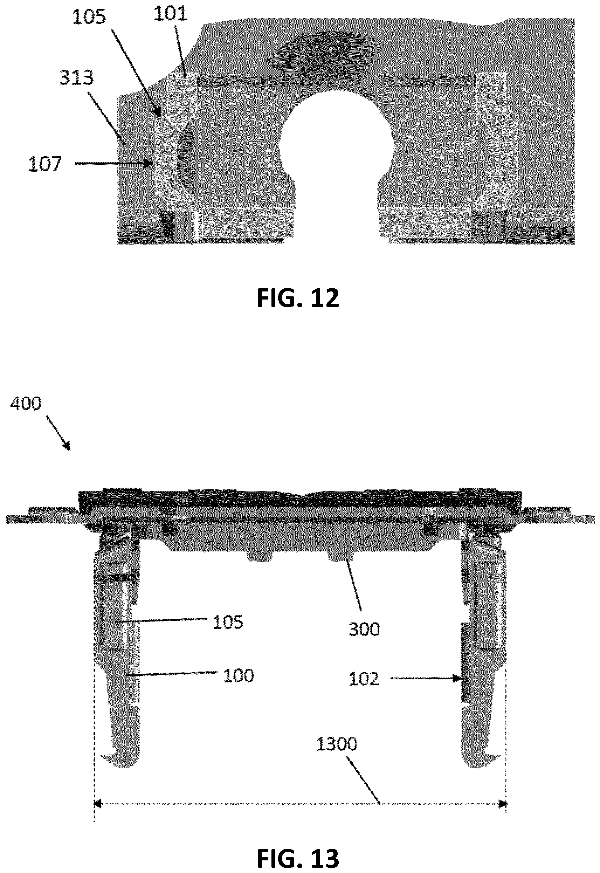

The present invention relates to a mounting device for installing an electrical connection box in a wall. A particular embodiment of such mounting device may for instance be mounting device 400 in a configuration shown in FIG 13, including at least one claw 100, as described below in more detail, and a bridge 300, as also described below in more detail.

A claw which may be used in embodiments of the present invention, can be used in any standard bridge, with reduced width and optionally length, and made more compact, but with high strength. In embodiments of the present invention, the claw is detachable, and it includes a bracing system (which can be detachable from the claw) for clamping the claw to a bridge upon engaging the claw to the bridge. Simultaneously to clamping, the claw is secured in a fixed position upon actuation of the bracing system if the bridge and claw are being installed on a surface, e.g. in an electrical outlet box, the claw having anchoring means which press against the electrical outlet box, fixing its position against the box and, in turn, fixing the position of the bridge to which the claw is clamped.

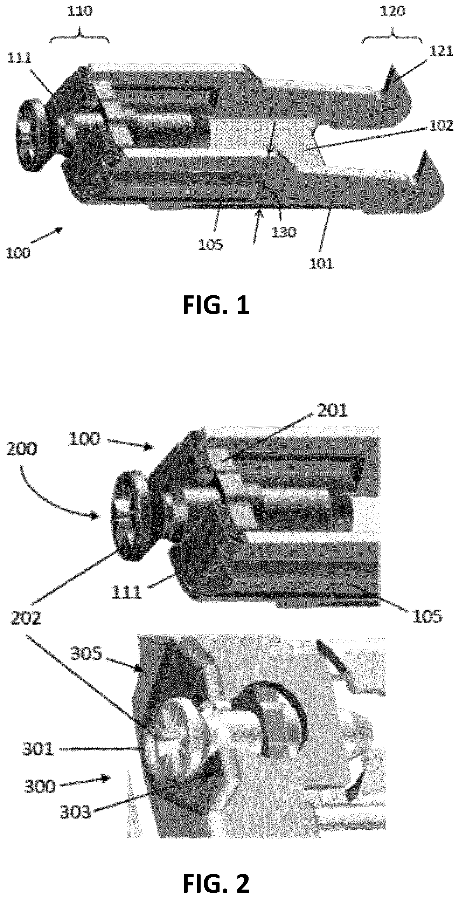

FIG 1 illustrates a claw 100 which may be used in a mounting device in accordance with embodiments of the present invention. The claw 100 comprises at least one arm 101, preferably two substantially parallel arms linked by a structural element 102, such as a plate or bars between the arms 101. In some embodiments, the two arms 101 may be formed of flat, elongated plates, which are easy to produce and to shape. The at least one arm 101 comprises a proximal portion 110 including an attaching portion 111 suitable for providing attachment to a bridge, and a distal portion 120 including anchoring means 121 for anchoring the claw 100 to a building structure, e.g. to a hole or an electrical outlet box installed in a wall, column, ceiling or floor or the like. The anchoring means 121 may include for example hooks which can be secured, for example upon attaching the claw 100 to the bridge and actuating a bracing system, to exert pressure against the building structure, e.g. against the walls of a hole therein, or against the walls of an electrical outlet box provided therein, or which can otherwise be held inside a hole in a building structure.

The claw 100 comprises a longitudinal rib 105, e.g. a rib at each arm 101, for example extending towards the proximal portion 110 of the arm. For example, the length, width and depth of the rib in one particular example are 30.6 mm, 13 mm and 5.7 mm respectively, embodiments not being limited thereto. The rib may provide a protruding shape at one side, e.g. the outside, of the arm 101 of the claw 100, and a notched shape at the other side thereof, e.g. the inside. The insides of two arms 101 of the claw 100 are oriented towards one another, while the outsides are oriented away from one another. The rib 105 increases the strength of the claw 100. This allows a reduction of the overall size of the claw 100. For example, the claw 100 may be shorter and/or thinner than a similar claw of equal dimensions but without provision of the rib 105, while providing the same strength. The rib 105 thus improves the compactness of the claw 100. For example, the width 130 of the widest portion of the arms 101 may be between approximately 8 mm and 30 mm and the arm 101 may show a moment of at least 200 N cm. For example, the claw 100 may be made from an aluminum alloy, a zinc alloy, etc.

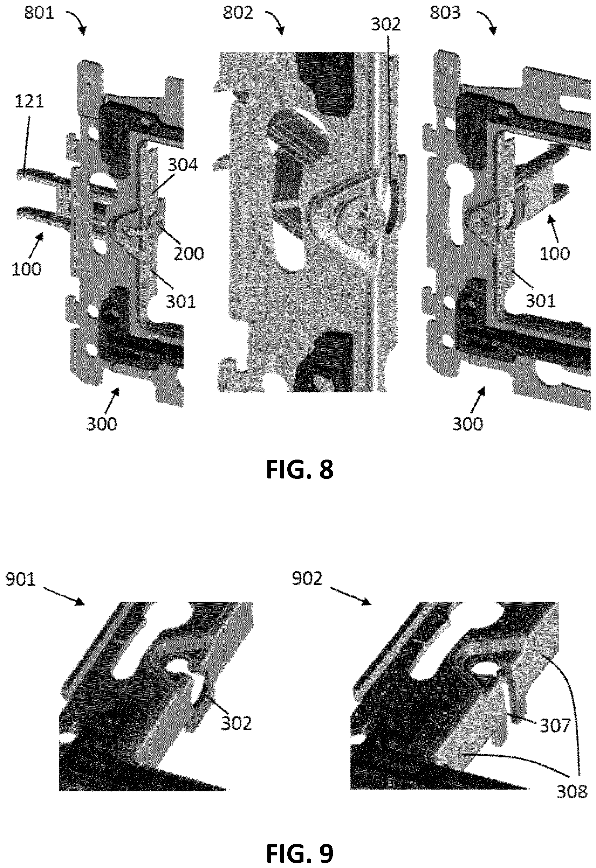

In some embodiments of the present invention, a bracing system 200 is included as shown in FIG 2. The bracing system 200 is arranged to secure the claw 100 to a bridge 300 as shown in the lower drawing of FIG 2 and in FIG 8. For example, the bracing system 200 may be adapted to engage with the attaching portion 111 in the claw 100 and an attaching portion 301 in a bridge 300, so that when the bracing system 200 is operated, it clamps the claw 100 and the bridge 300 together. In some embodiments, the bracing system 200 is a sub-system included in the claw 100, optionally detachable thereof. For example, the bracing system 200 may include a fastener or nut 201, for example a flat plate including a threaded hole 205, and a corresponding screw 202, which may be suitable to sandwich together an attaching portion 301 of the bridge 300 and an attaching portion 111 of the claw 100. The present invention is not limited to the described attaching portions 111, 301 and bracing system 200, and any other suitable system can be used in order to releasably mechanically attach the claw 100 and bridge 300 together.

As already introduced, the arms 101 of the claw 100 may be linked by a structural element 102. In some embodiments, the structural element 102 may extend along the longitudinal direction between the arms as shown in FIG 1. For example, the structural element 102 linking the arms 101 of a claw 100 along their longitudinal direction may advantageously be positioned at the backside of the claw, i.e. at the side away from the side which contacts the building structure when the mounting device is anchored in the building structure, so that the structural element 102 is not in physical contact with the building structure when the mounting device is installed. It may be positioned away from the screw bosses of electrical outlet boxes used for building in appliances. Thus, the arms 101 and the anchoring means 121 are the only contact with the walls of the hole or electrical outlet box. Because no plate at the front side of the claw 100 touches or is pressed against the walls of the hole or electrical outlet box, the distance between the claws 100 (the distance between the anchoring means 121 of the claws 100 attached to a bridge 300) can be reduced.

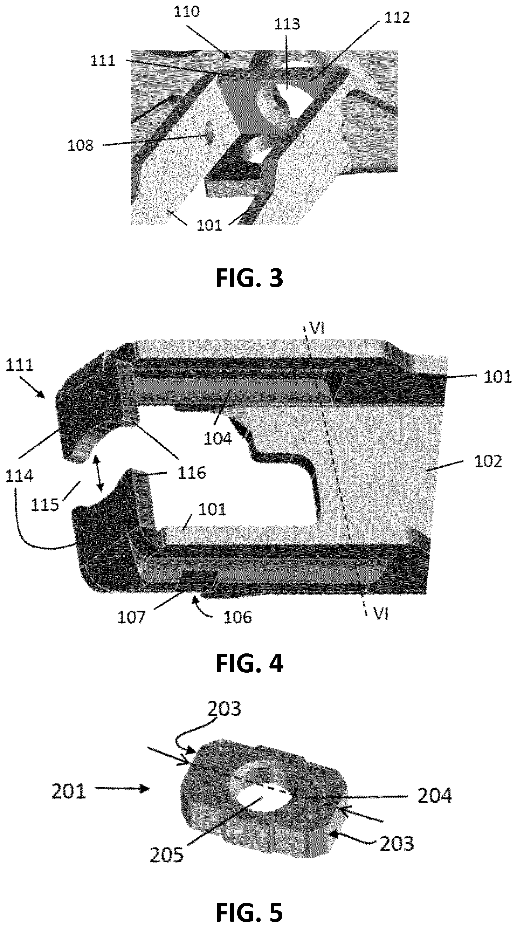

In a comparative example, as shown in FIG 3 (not showing the ribs 105), a structural element 112 linking the arms 101 is included at the proximal portion 110, for example at the proximal end. For example, the structural element 112 may include a plate forming a U-shape with the arms 101 of the claw 100. Thus, the attaching portion 111 of the claw 100 may include simultaneously the structural element 112 linking the two arms 101; for example, the attaching portion 111 may comprise the plate of material linking the two arms 101 of the claw 100 at the proximal end, and it may be adapted to engage the bracing system (not shown). For example, the plate may include a hole 113 for fitting a screw 202, so the nut 201 of the bracing system 200 presses on the plate when the screw 202 is tightened. In other embodiments, the plate may include a slot reaching the edge of the plate and opening it on one side, instead of a hole 113. The positioning of the screw 202 and nut 201 can be done easily from the open side of the attaching portion 111. The nut and screw can also be fitted along both arms of the claw.

In other embodiments, as shown in FIG 4, the attaching portion 111 may include a tab 114 protruding from each arm 101, leaving a gap 115 between them and totally separating the tabs 114, so the bracing system 200 (e.g. the screw 202 and nut 201) can be advantageously positioned easily in the claw 100 from either side of the claw (front or backside). For example, the gap 115 between tabs 114 may be wide enough for the body of the screw 202 to fit, but small enough so the nut 201 may contact and overlap both tabs 114, thus allowing contact between the nut 201 and the attaching portion 111 (tabs 114) of the claw 100. In this latter case, the gap 115 does not allow linking the two arms 101 as was the case in FIG 3, so an additional structural element 102 should be positioned along the arms 101 of the claw 100, e.g. at the backside as already explained above with respect to FIG 1.

Because of the gap 115 (or the slot as discussed with respect to FIG 3) provided in the attaching portion 111, the bracing system 200 can be pre-assembled away from the claw 100, and then included in its pre-assembled form in the claw 100 through the gap 115 or slot. There is advantageously no need to assemble the bracing system 200 directly in the claw 100, which would be more complex and time consuming. For example, the screw 202 and nut 201 can be screwed onto each other in beforehand, and fitted into the attaching portion 111 of the claw 100 only when needed. The attaching portion 111 may also include stops 116 (in the sides of the slot, or on the tabs 114) to reduce or avoid the chance of accidentally sliding the bracing system 200 out of the claw 100. Removing and attaching the bracing system 200 from the attaching portion 111 of the claw 100 can be easily done by hand, or by use of simple, generally available tools, such as pliers.

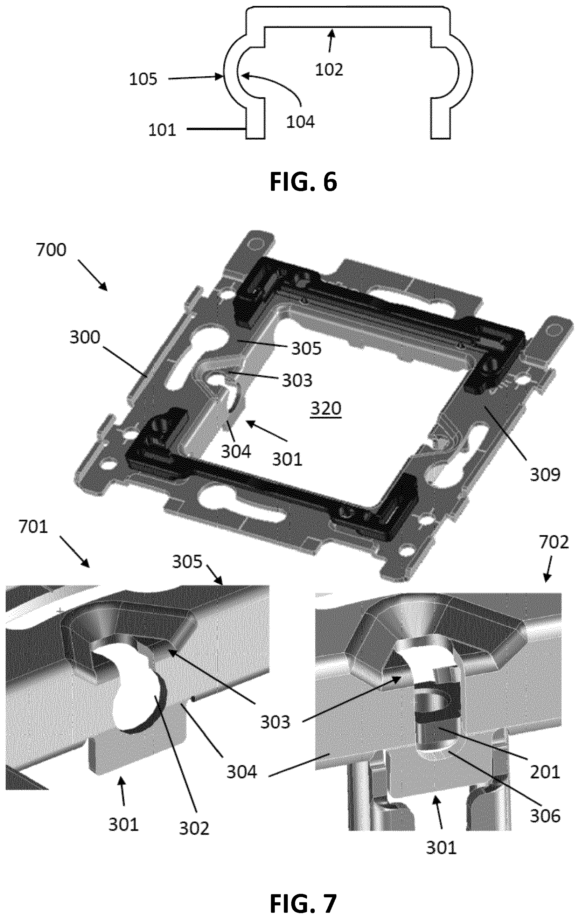

In some embodiments of the present invention, the arms 101 of the claw 100 and the bracing system 200 are adapted to tightly engage together and improve fixation. For example, the bracing system 200 may comprise a threaded nut 201 which is shaped to closely fit the arms 101 of the claw 100. For example, as shown in FIG 5, the length 204 of the nut 201 may closely fit the distance between the arms' surfaces facing each other. Additionally or alternatively, the nut 201 of the bracing system 200 may comprise protrusions 203, which fit respective longitudinal grooves 104 included in the surfaces facing each other of the two arms 101 of the claw 100 (shown in FIG 4 and FIG 6). A groove 104 may be, but does not need to be, formed by pressing material to the other side of the arm 101 so as to form the rib 105 discussed earlier. Both options (length of the nut 201 fitting the distance between the arms 101 of a claw 100, and protrusions 203 fitting the grooves 104) separately or combined improve the positioning of the nut 201 and reduce or avoid its rotation while tightening the screw 202, thus improving clamping.

In some embodiments of the present invention, the shape or profile of the rib 105 and of the longitudinal groove 104 in each arm 101 are complementary to each other. This is shown in FIG 6, which schematically depicts the cross section of the claw 100 shown in FIG 4 (the cross section of the claw 100 through the dashed line VI-VI). Obtaining such profile can be done easily, e.g. by stamping and shaping metal sheets to form the arms 101 of the claw 100.

The claw 100 includes a locking system 106, shown in FIG 4. The locking system 106 may be suitable to engage with the bridge 300, for example the locking system 106 includes a depression 107 on the ribs 105 which may engage with a pair of alignment teeth 313 of the bridge 300, and lock the position of the claw 100, e.g. the angular position. However, other locking systems may be included, such as a hole 108 on the arm (shown in FIG 3), which may engage with alignment teeth of the bridge, such as with studs 312 provided on teeth 311 (as explained below with reference to FIG 9).

A bridge which may be used in a mounting device in accordance with embodiments of the present invention, is adapted to engage with at least one claw as described above.

The bridge is suitable for harboring a functional insert, e.g. electric components and/or devices, for example an outlet, socket, USB sockets, switch such as 24V switch, dimmers, sensors, and/or appliances such as thermostats which can be mounted inside a hole or cavity produced in a building structure such as a wall, ceiling, floor, etc., for example inside an electrical outlet box included in said hole or cavity. The bridge may allow a compact installation, reducing the distance between claws. The bridge may comply with the standard 45x45 mm.

The upper drawing 700 of FIG 7 shows an exemplary bridge 300 comprising a main frame 309, including anchoring means for further fixing the bridge 300 to a building structure, for fixing a functional insert such as electrical components, etc. and for allowing further elements to be fixed on the bridge. The central empty area 320 of the bridge 300 may harbor the functional insert, e.g. electric components, such as sockets, switches, sensors, etc. The bridge 300 comprises an attaching portion 301, which may act in collaboration with e.g. an attaching portion 111 of a claw 100, the claw 100 including a bracing system 200. The attaching portion 301 of the bridge 300 comprises an aperture 302 adapted for engaging the bracing system 200. Two different exemplary attaching portions 301 (comprising apertures 302, 306 with different shape) are shown in the lower drawings 701, 702 of FIG 7. Drawing 701 and 702 show an attaching portion 301 including a clamping zone 303. The aperture 302, 306 are formed by two parts, the first part in the clamping zone. They form an angle, for example right angle, or a 175° angle, or an angle in between. In the aperture 302 of the left lower drawing 701 of FIG 7, the aperture may be formed by two holes in contact to each other, or a hole and a slit forming a single keyhole-shaped aperture. The part of the aperture in the clamping zone can be smaller than the head of the screw but wide enough to fit the rest of the body of the screw. However, the part of the aperture at an angle with the clamping zone may be bigger, so the head of the screw can pass through said part of the aperture. In the aperture 306 of the right lower drawing 702 of FIG 7, the aperture may be formed by two slits connected. As before, the part of the aperture in the clamping zone can hold the head of the screw. The lower right drawing 702 also shows how the attaching portion interacts with a part of a bracing system 200, more particularly with the nut 201, in accordance with embodiments of the present invention.

More specifically, the aperture 302, 306 of the attaching portion 301 of the bridge 300 is adapted so that it closely engages with and fits the bracing system 200 included in the claw 100 when the mounting device is installed, e.g. upon actuation of the bracing system 200. This is shown in the lower drawing of FIG 2 and the lower right drawing of FIG 7. The aperture 302 allows a reduced contact, or lack thereof, between the bracing system 200 and the frame 309 of the bridge 300 in any other place than on the clamping zone 303 of the attaching portion 301 of the bridge 300. For example, as will be explained below, a part of the bracing system 200 (e.g. the nut 201) can fit inside the aperture 302, reducing or avoiding contact between the frame 309 of the bridge 300 and said part. This advantageously allows flexibility of design, and the distance 1300 between two opposite claws 100 on a bridge 300 of a mounting device 400 (such as the one shown in FIG 13) can be reduced, bringing the claws 100 closer to the central zone 320 of the bridge. With "distance between two opposite claws" it is understood the distance between the farthest points between each claw 100 when engaged with a bridge 300 and in mounting position, as shown in FIG 13, e.g. the bracing system 200 being actuated, e.g. the claws being at 90° with the bridge. This reduction can be reinforced with the reduction of the width 130 of the claw itself. As will be explained below, there may be a small interaction between the aperture 302, 306 and the nut 201 which improves clamping, without "pushing away" the claw 100 from the center of the bridge 300, and which improves fixation of the nut 2012 during clamping.

In some embodiments, the attaching portion 301 of the bridge and its aperture 302, 306 allows a predetermined amount of play. In particular, as shown in the sequence of FIG 8, the aperture 302 may allow pivoting of the bracing system 200, thus allowing tilt of the claw 100 in which the bracing system 200 can be or is included. The aperture 302 may serve as a guide for the bracing system 200, which may be sufficiently loose for allowing the claws 100 to be laid down, for example they may be laid down at the same level of the frame 309, without detaching the claw 100 from the bridge 300. This position is shown in the drawing 801 at the left of FIG 8. The claws 100 may be held by the attaching portion 301 and the bracing system 200 to the bridge 300 in a loose way, for example allowing laying the claws at 0° with respect to the bridge 300. Moving the claws 100 to an upright position, e.g. at 90° with respect a main bridge surface, can be done by the end user, just before installation. This position is shown in the drawing 803 at the right of FIG 8.

Advantageously, a mounting device including a bridge 300 in accordance with embodiments of the present invention may be assembled before delivery to the end user. For example, the claws 100 may be attached to the attaching portion 301 of the bridge 300, but without being clamped, thus without engaging the bracing system 200 with the attaching portion 301 of the bridge 300. For example, the claws 100 can be assembled at 0° with respect to a main surface of the bridge 300, or at any suitable angle. The mounting device can be stored as an assembled yet unclamped unit, and may be stored substantially flat, e.g. the claws 100 being at the same level as the bridge 300 (left drawing 801 of FIG 8). Thus, transport and storage of individual claws 100 separate from the bridge 300 is not necessary because the mounting device is assembled (hence reducing the amount of separate parts, which may be prone to be lost), and at the same time it saves space because mounting devices with claws 100 laid down at the same level as the bridge 300 may be piled up easier and in higher numbers for the same volume than a mounting device with claws 100 in upright position.

The end user may, right before installation, tilt the claw 100 as shown in the central drawing 802 of FIG 8, which is allowed by the shape of the aperture 302 of the bridge 300. Particularly the distal portion 120 of the claw 100 may tilt backwards, towards the central zone 320 of the bridge, away from the direction that the anchoring means 121 are facing, and be fixed in an upright position at 90° with the bridge.

In some embodiments of the present invention, the attaching portion 301 is adapted in shape so as to allow close fitting of the bracing system 200 when the bracing system 200 is actuated, so the bracing system 200 or parts thereof are flush with the main surface 305 of the bridge 300 upon clamping, thus obtaining a compact and smooth mounting device and allowing smooth attachment with other pieces such as switches or bezels. For example, in some embodiments, a part of the attaching portion 301 of the bridge 300 includes a clamping zone 303 or surface with a recess (e.g. a sloped or conical recess) adapted to fit the head of the screw 202 of the bracing system 200. For example, the recess may be at a predetermined depth, e.g. a depth of 1.8 mm, from the surface 305 of the bridge 300 opposite to the surface of the bridge 300 facing the attaching portion 111 of the claw 100, as shown in the lower drawing of FIG 2. Hence, when the bridge 300 and claw 100 are clamped together, the screw head may be substantially flush with the bridge surface 305.

In some embodiments, the attaching portion 301 of the bridge 300 includes a blocking lip 304, suitable for providing structural support to the claw 100, and blocking it from bending or bulging backwards, away from the inner walls of the hole or electrical outlet box in the building structure to which the mounting device is supposed to be attached. Such blocking lip 304 is shown, for example, in the lower drawings of FIG 7 and in FIG 8. In embodiments of the present invention, the blocking lip 304 extends upwards (for example at 90°, or at other angles, such as 175°) from the surface 305 including the clamping zone 303 of the attaching portion 301 of the bridge. The blocking lip 304 may be adapted to be in contact with the claw 100, only contacting the arms 101 thereof. For example, the blocking lip 304 may have such height so that the structural element 102 at the backside of the claw 100 is not in contact with the blocking lip 304 upon clamping the claw 100 and the bridge 300. For example, the blocking lip may be flush with the structural element 102 (e.g. linking plate) of the claw 100, possibly leaving a gap between them. This is illustrated in drawing 803 of FIG 8. Thus, the structural element 102 of the claw 100 does not touch either the bridge 300 nor the electrical outlet box, when provided at the backside of the claw 100 and distant from the attaching portion 110 of the claw, in such position that the blocking lip 304 of the bridge 300 does not interfere with the structural element 102. This advantageously further reduces the width needed to fit the mounting device into a hole or electrical outlet box in a building structure.

In some embodiments, the aperture 302, 306 of the attaching portion 301 of the bridge 300 extends from the clamping zone 303 to the blocking lip 304 of the bridge 300. Thus, the tilt of the claw 100 may be allowed by pivoting the bracing system 200 (e.g. the screw 202) along the aperture 302, from the clamping zone 303 to the part of the aperture 302 extending through the blocking lip 304, e.g. at 90° of the bridge surface 305. In some embodiments, as shown in the lower right drawing 702 of FIG 7, the aperture 306 is a simple straight slit, which is easy to obtain; however, it may have other suitable shapes.

In some embodiments, the aperture 302, 306 of the attaching portion 301 of the bridge allows fitting the nut 201 of the bracing system 200 in the part of the aperture extending through the lip 304. For example, in the lower right drawing 702 of FIG 7, the nut 201 can be held by the aperture 306, fitting inside partially. It is advantageous that the aperture 306 can be used to hold the nut 201 in place. Moreover, as mentioned before, the aperture 302, 306 allows the system to reduce the contact of the bracing system 200 with the bridge 300 so that the only interactions between parts of the bracing system 200 and the bridge 300 are clamping interactions, and there is no need to compensate for other interactions or increase the distance between claws 100. In some embodiments, for example, the clamping nut 201 fits the aperture 302, 306 of the bridge 300, so the nut 201 only contacts the attaching zone 111 of the claw 100 when clamped, and it is not disturbed or hindered by any contact with any part of the bridge 300, such as for instance the blocking lip 304 of the bridge 300. Without the aperture 302, 306, the thickness of the blocking lip 304 has to be taken into account when designing the bridge 300 and the claw 100, because the nut 201 and the claw 100 would have to be installed farther away from the central zone 320 of the bridge 300. Thus, the bridge 300 can be arranged so that the distance between claws 100 at opposite sides of the bridge 300 can be reduced (e.g. as much as twice the blocking lip thickness, e.g. 2 mm, or for example twice as much as the thickness of the material forming the bridge.

In some embodiments of the present invention, the aperture 302, 306 in the attaching portion 301 of the bridge 300 may be adapted to allow attaching and detaching the claw 100 without disengaging or disarming the bracing system 200. These options allow easy introduction of the bracing system 200 and a fast assembly, reducing time of installation of the mounting device. For example, the bracing system 200 may be already engaged to the claw 100, so the claw 100 including the bracing system 200 can be easily mounted on the bridge 300. It is an advantage of at least some embodiments that the claws do not need to be demounted. The typical width of the built in box may be about 52mm, resulting in the fact that the system can be built in as a single assembly.

FIG 9 shows two exemplary embodiments thereof. The drawing 901 at the left of FIG 9, shows that the aperture 302 has keyhole shape, with a predetermined size adapted to allow passage of the bracing system 200. For example, the wide hole of the keyhole shaped aperture may allow the passing of the screw head of the bracing system 200, and the narrow portion of the keyhole shaped aperture may be smaller than the head, so screw 202 is being held in place. The keyhole may be present in the part of the aperture included in the blocking lip 304. The drawing 902 at the right of FIG 9, shows that the aperture 307 extends to an edge of the bridge. For example, the aperture 307 may extend through the lip 308 and divide it in two. Such aperture 307 is easy to obtain, and the size of the head of the screw 202 is less critical, because the screw may be introduced via the open edge of the divided lip 308. In general, the strength of the bridge 300 is improved.

In either case, the aperture 302, 307 may provide a wide tilt angle of the claw, for example down to 90°, and also an easy attachment of the claw 100 and bridge 300.

During installation of the mounting device, it is preferable to keep the claws 100 towards a specific direction, for better anchoring. Usually, it is preferred to keep any movement of the claws 100 confined in a plane.

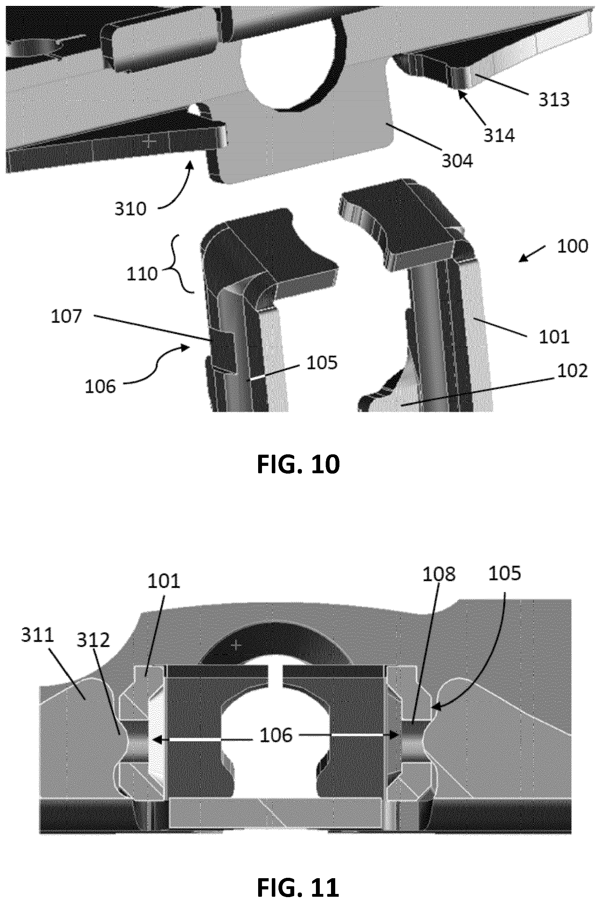

Thus, in some embodiments of the present invention, the bridge 300 may include an alignment system for improving installation. Such system is shown in FIG 10. For example, the bridge 300 may include a tooth or teeth 313 leaving a gap between them adapted to receive the claw 100 between them. For example, such system (e.g. teeth 313) may be provided on the blocking lip 304, distant from the attaching portion 301 of the bridge 300, facing the back side of the clamping zone 303 of the bridge. In some embodiments, the teeth 313 protrude from the lip 304, the surface of the teeth being coplanar (parallel) to the surface 305 of the bridge, or in an angle with said surface. The teeth frame the attaching portion 301 of the bridge, allowing proper engagement with the claw, while at the same time allowing tilting but avoiding claw 100 leaning to a direction out of the tilt plane, because such movement of the claw 100 would be blocked by the alignment system, e.g. by the edges of the teeth 313 which are parallel to each other.

In some embodiments of the present invention, a locking system 310 is included in the bridge 300, which may act in combination with a locking system 106 of the claw, thus fixing the position (e.g. angular position, e.g. in an upright position at 90° with the bridge) of the claw 100. In preferred embodiments, the locking system 310 of the bridge 300 is combined with its alignment system, e.g. the alignment system may be combined with teeth 313 and juts 314.

In some embodiments as shown in FIG 11, the locking system 310 comprises teeth 311 including an engaging stud 312 adapted to engage the locking system 106 of the claw 100. For example, each tooth 311 of the alignment system may include a stud 312 adapted to fit a hole 108 or cavity at a predetermined position along the arms 101 of the claw 100, as shown in FIG 3 and FIG 11. Notably, FIG 11 shows a cross section of a claw 100 locked to teeth 311. The claw 100 includes ribs 105 including cavities or holes 108 at a predetermined position along each arm 101. The distance between the edges of the teeth 311 may be enough to fit the arms of the claw 100 including the ribs 105, so the locking is obtained by alignment of the locking system of the claw (holes 108) and the locking system of the bridge (studs 312).

In some embodiments, no engaging stud is necessary, and the alignment system may be adapted to engage the locking system 106 of the claw 100 as shown in FIG 10. For example, the thickness of the edges of the teeth may fit depressions 107 provided at a predetermined position on the ribs 105 along the arms 101 of the claw. Additionally, the gap between the teeth may be shaped to adjust closely the arms through the proximal portion 110 of the claw as shown in FIG 12. In such cases, juts 314 can be provided at the top of the teeth, improving locking. The "juts" remove the need of elastic bands for holding the claws in position. They may be for example 0.2 mm jut 314 protruding from the tip of the teeth.

A mounting device 400 in accordance with embodiments of the present invention, includes at least one claw 100 in accordance with embodiments as described above, and a bridge 300 in accordance with embodiments as described above, for instance in a configuration shown in FIG 13.

The mounting device 400 combines the reduction of the size of the at least one claw 100 with the reduction of distance between claws 100 in the bridge 300, thus obtaining a compact mounting device 400 which still complies with standards of area needed to fit sockets, switches and other electric elements. The reduction of the size stems from the presence of the rib 105, which allows reducing width without compromising strength. The reduction of distance 1300 between claws 100 stems from the presence of an aperture 302, 306, 307 in the bridge 300, adapted to reduce interaction between the bracing system 200 included in the claw 100 and parts of the bridge outside its clamping zone 303, and also due to the reduction of claw size and positioning the structural link 102 of the claw in its backside. For example, the distance 1300 between claws may be 52 mm (which is approximately 5 mm smaller than existing systems), while still allowing enough room in central area 320 of the bridge 300 to harbor standard functional inserts such as electric components. The claw thus can stay on its position during mounting, resulting in the fact that no demounting is required.

The aperture in the bridge also allows tilt of the at least one claw, improving storage and manipulation. Some embodiments allow easy assembly of the at least one claw with the bridge, for example the embodiment including a keyhole-shaped aperture or the embodiment at the right drawing 902 of FIG 9, which allows sliding the bracing system in the claw upwards. Some embodiments of the system allow easy position alignment and locking. Overall, this system is highly user-friendly and safe.

For example, typically a user has to align the attaching portions of the bridge and the claw, hold the position and then attach the bracing system to both the bridge and claw. This is a relatively delicate operation that requires practice and time. However, the present invention allows a user to fit the bracing system 200 (e.g. a screw and nut) inside the gap 115 between two tabs 114 (including stops 116 for holding the bracing system 200) at the attaching portion 111 of the claw 100. A simple tool such as pliers can be used, if desired or needed. This allows providing a claw 100 including a bracing system 200 in a fast and easy way. Then, the bracing system 200 can be introduced through the aperture 302, 307 of the attaching portion 301 of the bridge. For example, the head of the screw 202 of the bracing system 200 can be introduced through the wide hole of the keyhole-shaped aperture 302. Alternatively, the part of the body of the screw 202 between its head and the attaching portion 111 of the claw 100 can be introduced through the open aperture 307 extending to the edge of the lip 314.

In any case, the aperture 302, 307 allows a very fast engaging of the at least one claw 100 and bridge 300, thus obtaining fast assembly of the mounting device, and no training is required. No special tools are required, and it can be done in a couple of seconds without previous experience.

The claws 100 can be laid down at the same plane of the bridge 300, allowing easy and compact transport and storage with low risk or no risk of missing pieces. This advantage can be obtained with embodiments of the present invention, even if using an aperture 306 (FIG 7, lower right drawing 702) not allowing easy mounting, as the open slot aperture 307 or keyhole aperture 302 would do. Then, the end user may, upon installation of the mounting device 400, instead of having to attach the claws to the bridge, simply tilt the claws 100 over or around 90° with respect to the bridge 300, which become locked to the bridge in that position without having to hold them or using an elastic band. Then the end user can introduce the mounting device 400 in a suitable hole or electrical outlet box in a building structure, and tighten the bracing system 200.

For example, the attaching portion 111 of the at least one claw 100 contacts at least the nut 201 when the screw 200 is tightened, the screw 200 being held by the attaching portion 301 of the bridge 300. The nut 201 and the attaching portion 111 of the claw 100 align due to the actuation, and force the claw 100 outwards, thus pressing it against the inner walls of the hole or electrical outlet box. The screw 202 may be accessible from the outside after installation of the mounting device in the wall, as it is known from the prior art. Loosening the screw 202 reduces the pressure of the claw 100, allowing the mounting device 400 to be removed.

Assembling the pieces and anchoring the mounting device 400 to the hole or electrical outlet box by means of the claws 100 can be done in a very fast and simple way, and it is compatible with standard boxes of 52 mm. Also, removing the mounting device can be done fast, with no need to disassembling the claws from the bridge.

Because the claws 100 can be made smaller and thinner, without reducing strength thereof, the claws 100 can be used in standard bridges.

In some embodiments of the present invention, the mounting device 400 includes a locking assembly, e.g. comprising at least a locking system 106 provided in the claw 100, optionally further comprising a locking system 310 provided in the bridge 300 arranged to engage with the locking system 106 of the claw 100. The locking assembly may lock the position of the claw with respect of the bridge, for example when the user tilts the claw to an upright position with respect to the bridge before installation of the mounting device. The locking assembly may help positioning the mounting device with no need of firmly attaching the claw to the bridge, for example by locking the position of the claw with respect to the bridge, or by at least reducing or avoiding tilt.

In some embodiments of the locking assembly, the arms of the at least one claw may include a cavity or hole 108 adapted to fit in an engaging stud 312 provided in the bridge, e.g. provided on a shaped tooth of the bridge (FIG 3, FIG 11). Thus, the locking assembly is formed by a locking hole in the arm of the claw and an engaging stud of the bridge tooth. This provides a reliable locking of the position of the claw.

More in detail, as shown in FIG 11, although the distance between the edges of the teeth 311 may be enough to fit the arms of the claw including the ribs, the studs 312 would exert a pressure on the arms 101. The arms and/or studs may slightly bend, and when the locking systems of the claw and bridge align, the pressure is released, the studs 312 fit in the holes 108 of the arms, and the position is locked. This locking is reversible, however, by overcoming the elastic force against bending and the friction. Thus, the claw 100 can be removed relatively easily from the bridge 300.

An alternative locking assembly is shown in detail in FIG 10 and FIG 12. FIG 12 shows a cross section of a claw attached to teeth 313. The arms of the claw include ribs 105 comprising a depression 107, rather than a hole, for fitting a locking system of a bridge. The depression should extend along the arm at least as much as the thickness of the edge of the teeth 313. The shape of the proximal portion 110, particularly its end, may be adapted to fit the locking system 310 of the bridge, if needed. For example, the corners may be smooth and/or curved, as shown in FIG 10. The ribs 105 increase the distance between the outer sides of the arms. Thus, the pressure increases because the gap between the teeth 313 is slightly smaller than the distance between the arms of the claw including the ribs. This pressure may cause slight bending inwards the arms 101 of the claw. Elastic bending of the arms may be improved if the linking structure 102 is positioned along the arms of the claw, but distant from the proximal portion 110 (as shown in FIG 10). However, the bridge is adapted so that the depression 107 fits the gap between the teeth 313, releasing the pressure and locking the claw to the bridge in a releasable way as before. This allows using the claw with any bridge including said alignment system. For example, in some embodiments the depression has a depth of approximately 0.3 mm from the top of the rib 105. The depression 107 can be easily provided, e.g. by stamping, grinding, etc. The teeth 313 of the bridge may include juts 314 at the tip, embracing or contacting one of the slopes of the rib 105, to improve locking of the claw with no need to use elastic material. The jut 314 is shown in FIG 10, but it is not shown in FIG 12.

In embodiments of the present invention, the locking assembly is easily provided, with no need to provide a cavity or to perforate a hole through the arm, thus avoiding reduction of its strength, and with no need to provide an engaging stud on the bridge tooth adapted to fit the cavity or hole. The locking system in the claw may be for example simply a reduction of the thickness of the rib, which may be provided by simple mechanical means, with a size so that it approximately fits the edge of the tooth of the bridge. Because the tooth may be a simple plate or tab with a predetermined thickness, the locking system in the bridge is easily provided, with no extra additions, studs or complex cutting and shaping.

The position of the locking assembly may determine the relative position of the claw 100 with respect to the bridge 300, for example the distance between the attaching portions of the claw and of the bridge, which influences the attachment strength between the claw and the bridge (e.g. upon clamping, e.g. upon tightening the screw of the attachment means).

For example, with reference to the discussed embodiments of the locking assembly, the relative position between the depression 107 of the rib 105 or hole 108 of the claw and the edge of the tooth 313 or engaging stud 312 may determine the distance between the attaching portion 111 of the claw 110 and attaching portion 301 of the bridge 300. For example, the distance between the locking system in the claw (e.g. hole or cavity) and the proximal end of the claw may be the same, or slightly smaller, than the distance between the locking system of the bridge and the attaching portion of the bridge. The distance may be optimized, so maximum clamping can be obtained when the proximal end is just in contact with the attaching portion of the bridge, without exerting excessive force in any of the locking assembly, the attaching portions and/or the bracing system. This reduces the chance of damage (for example, due to deformation of the stud or the tooth, or the rib of the claw, or the nut or the attaching portions of the claw or bridge) while at the same time obtaining proper clamping.

## Claims

1. A mounting device (400) for installing an electrical connection box in a wall, the mounting device comprising at least one claw (100) for fixing the position of the mounting device (400), the at least one claw including a bracing system (200); and a bridge (300) for fitting the at least one claw (100), the bridge (300) comprising at least one attaching portion (301) for attaching the at least one claw (100) to the bridge (300), the at least one attaching portion (301) comprising an aperture (302, 306, 307) adapted to engage the bracing system (200) of the at least one claw (100), wherein the aperture (302, 306, 307) allows pivoting of the bracing system (200) so the at least one claw (100) can fit the bridge (300) while being allowed to tilt with respect to the bridge (300), and wherein the at least one claw (100) has an elongated shape between a proximal portion (110) and an opposite distal portion (120) comprising anchoring means (121), **characterized in that** the bridge (300) further comprises a bridge locking system (310) comprising at least one tooth (311, 313) for alignment and locking of the angular position of at least one claw (100) with respect to the bridge (300) when assembled, the tooth (311, 313) comprising a jut (314) at its tip adapted to engage and lock the position of the claw (100), the claw (100) further comprises at least one rib (105) extending longitudinally between the distal portion (120) and the proximal portion (110) for increasing the strength of the claw (100), wherein the claw further comprises a claw locking system (106) comprising a depression (107) on the at least one rib (105) suitable for engaging and fitting the tooth (313) in the bridge (300), for locking the position of the claw (100) with respect to the bridge (300), when assembled.

2. The mounting device (400) of the previous claim, wherein the at least one attaching portion (301) comprises a clamping zone (303) for attaching the at least one claw (100) to the bridge, the aperture (302, 306, 307) of the at least one attaching portion (301) being adapted so that the bracing system (200) contacts the bridge (300) substantially only on the clamping zone (303) of the bridge upon actuation of the bracing system (200).

3. The mounting device (400) of any one of the previous claims, wherein the aperture (302, 306, 307) is further adapted so that the at least one claw can be fitted to the bridge without disengaging or disarming of the bracing system (200).

4. The mounting device (400) of any one of the previous claims, wherein the aperture (302) is a straight slit (306, 307) or a keyhole (302) for allowing passage of at least part of a bracing system (200).

5. The mounting device (400) of any one of the previous claims, wherein the at least one claw (100) comprises a proximal portion (110) comprising an attaching portion (111) for engaging a bracing system (200) and attaching the claw (100) to the bridge (300), the attaching portion (111) of the claw including a slot or gap (115) suitable for removably fitting the bracing system (200) in an assembled form.

6. The mounting device (400) of any one of the previous claims, wherein the at least one claw (100) comprises two elongated arms (101), each comprising a proximal portion (110) and an opposite distal portion (120) comprising anchoring means (121), wherein the claw (100) comprises a structural element (102) extending longitudinally between the arms (101) away from the proximal portion (110), and at the side of the arm opposite to the anchoring means (121).

7. The mounting device (400) of any one of the previous claims, wherein the bracing system (200) comprises at least one clamping nut (201), wherein the attaching portion (301) of the bridge (300) is adapted in size and shape so that the clamping nut (201) fits within the aperture (302) of the attaching portion (301).

8. The mounting device (400) of claim 7, wherein the at least one claw (100) and the at least one nut (201) of the bracing system (200) are adapted to fit for avoiding rotation of the nut (201).

9. The mounting device (400) of claim 8, wherein the at least one claw (100) comprises a longitudinal groove (104) and the clamping nut (201) comprises a protrusion (203) for engaging with and fitting the longitudinal groove (104).

10. The mounting device (400) of any one of claims 1 to 8, wherein the at least one claw (100) comprising at least one rib (105) further comprises a longitudinal groove (104), and the bracing system (200) comprises a clamping nut (201) comprising a protrusion (203) for engaging with and fitting the longitudinal groove (104), the rib (105) and the groove (104) being provided at opposite sides of a same arm (101), and the profile of the rib (105) of the arm (101) being complementary to the profile of the groove (104) of that arm (101).

11. The mounting device (400) of any one of the previous claims, wherein the depression (107, 108) of the claw (100) is sized to fit the edge of the alignment tooth (311, 313) of the bridge (300) .

## Patentansprüche

1. Montagevorrichtung (400) zum Installieren eines elektrischen Anschlusskastens in einer Wand, wobei die Montagevorrichtung wenigstens eine Klaue (100) zum Fixieren der Position der Montagevorrichtung (400), wobei die wenigstens eine Klaue ein Stützsystem (200) beinhaltet; und eine Brücke (300) zum Einpassen der wenigstens einen Klaue (100) umfasst, wobei die Brücke (300) wenigstens einen Befestigungsabschnitt (301) zum Befestigen der wenigstens einen Klaue (100) an der Brücke (300) umfasst, wobei der wenigstens eine Befestigungsabschnitt (301) eine Öffnung (302, 306, 307) umfasst, die angepasst ist, um das Stützsystem (200) der wenigstens einen Klaue (100) in Eingriff zu nehmen, wobei die Öffnung (302, 306, 307) ein Schwenken des Stützsystem (200) ermöglicht, so dass die wenigstens eine Klaue (100) die Brücke (300) einpassen kann, während es ihr ermöglicht wird, sich hinsichtlich der Brücke (300) zu neigen, und wobei die wenigstens eine Klaue (100) eine längliche Form zwischen einem proximalen Abschnitt (110) und einem gegenüberliegenden distalen Abschnitt (120) aufweist, der Verankerungsmittel (121) umfasst, **dadurch gekennzeichnet, dass** die Brücke (300) ferner ein Brückenverriegelungssystem (310) umfasst, das wenigstens einen Zahn (311, 313) für eine Ausrichtung und das Verriegeln der Winkelposition wenigstens einer Klaue (100) hinsichtlich der Brücke (300) umfasst, wenn zusammengebaut, wobei der Zahn (311, 313) an seiner Spitze einen Vorsprung (314) umfasst, der angepasst ist, um die Position der Klaue (100) in Eingriff zu nehmen und zu verriegeln, wobei die Klaue (100) ferner wenigstens eine Rippe (105) umfasst, die sich in Längsrichtung zwischen dem distalen Abschnitt (120) und dem proximalen Abschnitt (110) zum Erhöhen der Festigkeit der Klaue (100) erstreckt, wobei die Klaue ferner ein Klauenverriegelungssystem (106) umfasst, das eine Vertiefung (107) an der wenigstens einen Rippe (105) umfasst, die zum Ineingriffnehmen und Einpassen des Zahns (313) in die Brücke (300) geeignet ist, zum Verriegeln der Position der Klaue (100) hinsichtlich der Brücke (300), wenn zusammengebaut.

2. Montagevorrichtung (400) nach dem vorhergehenden Anspruch, wobei der wenigstens eine Befestigungsabschnitt (301) eine Spannzone (303) zum Befestigen der wenigstens einen Klaue (100) an der Brücke umfasst, wobei die Öffnung (302, 306, 307) des wenigstens einen Befestigungsabschnitts (301) angepasst ist, so dass das Stützsystem (200) die Brücke (300) im Wesentlichen nur auf der Spannzone (303) der Brücke bei Betätigung des Stützsystem (200) berührt.

3. Montagevorrichtung (400) nach einem der vorhergehenden Ansprüche, wobei die Öffnung (302, 306, 307) ferner angepasst ist, so dass die wenigstens eine Klaue ohne Außereingriffnehmen oder Deaktivieren des Stützsystems (200) an der Brücke eingepasst werden kann.

4. Montagevorrichtung (400) nach einem der vorhergehenden Ansprüche, wobei die Öffnung (302) ein gerader Schlitz (306, 307) oder ein Schlüsselloch (302) zum Ermöglichen eines Durchgangs wenigstens eines Teils eines Stützsystems (200) ist.

5. Montagevorrichtung (400) nach einem der vorhergehenden Ansprüche, wobei die wenigstens eine Klaue (100) einen proximalen Abschnitt (110) umfasst, der einen Befestigungsabschnitt (111) zum Ineingriffnehmen eines Stützsystems (200) und zum Befestigen der Klaue (100) an der Brücke (300) umfasst, wobei der Befestigungsabschnitt (111) der Klaue einen Spalt oder eine Lücke (115) beinhaltet, die zum lösbaren Einpassen des Stützsystems (200) in einer zusammengebauten Form geeignet sind.

6. Montagevorrichtung (400) nach einem der vorhergehenden Ansprüche, wobei die wenigstens eine Klaue (100) zwei längliche Arme (101) umfasst, die jeweils einen proximalen Abschnitt (110) und einen gegenüberliegenden distalen Abschnitt (120) umfassen, der Verankerungsmittel (121) umfasst, wobei die Klaue (100) ein Strukturelement (102) umfasst, das sich in Längsrichtung zwischen den Armen (101) von dem proximalen Abschnitt (110) weg und an der Seite des Arms gegenüber dem Verankerungsmittel (121) erstreckt.

7. Montagevorrichtung (400) nach einem der vorhergehenden Ansprüche, wobei das Stützsystem (200) wenigstens eine Spannmutter (201) umfasst, wobei der Befestigungsabschnitt (301) der Brücke (300) in Größe und Form angepasst ist, so dass die Spannmutter (201) innerhalb der Öffnung (302) des Befestigungsabschnitts (301) passt.

8. Montagevorrichtung (400) nach Anspruch 7, wobei die wenigstens eine Klaue (100) und die wenigstens eine Mutter (201) des Stützsystems (200) angepasst sind, um zum Vermeiden einer Drehung der Mutter (201) eingepasst zu sein.

9. Montagevorrichtung (400) nach Anspruch 8, wobei die wenigstens eine Klaue (100) eine Längsnut (104) umfasst und die Spannmutter (201) einen Überstand (203) zum Ineingriffnehmen und Einpassen der Längsnut (104) umfasst.

10. Montagevorrichtung (400) nach einem der Ansprüche 1 bis 8, wobei die wenigstens eine Klaue (100), die wenigstens eine Rippe (105) umfasst, ferner eine Längsnut (104) umfasst und das Stützsystem (200) eine Spannmutter (201) umfasst, die einen Überstand (203) zum Ineingriffnehmen und Einpassen der Längsnut (104) umfasst, wobei die Rippe (105) und die Nut (104) an gegenüberliegenden Seiten desselben Arms (101) bereitgestellt sind und das Profil der Rippe (105) des Arms (101) zu dem Profil der Nut (104) dieses Arms (101) komplementär ist.

11. Montagevorrichtung (400) nach einem der vorhergehenden Ansprüche, wobei die Vertiefung (107, 108) der Klaue (100) bemessen ist, um an den Rand des Ausrichtungszahns (311, 313) der Brücke (300) einzupassen.

## Revendications

1. Dispositif de montage (400) pour installer une boîte de connexion électrique dans une paroi, le dispositif de montage comprenant au moins une griffe (100) pour sécuriser la position du dispositif de montage (400), l'au moins une griffe comportant un système de contreventement (200) ; et un pont (300) pour ajuster l'au moins une griffe (100), le pont (300) comprenant au moins une partie de fixation (301) pour fixer l'au moins une griffe (100) au pont (300), l'au moins une partie de fixation (301) comprenant une ouverture (302, 306, 307) adaptée pour venir en prise avec le système de contreventement (200) de l'au moins une griffe (100), l'ouverture (302, 306, 307) autorisant le pivotement du système de contreventement (200) de sorte que l'au moins une griffe (100) peut s'ajuster au pont (300) tout en étant autorisée à s'incliner par rapport au pont (300), et l'au moins une griffe (100) ayant une forme allongée entre une partie proximale (110) et une partie distale (120) opposée comprenant un moyen d'ancrage (121), **caractérisé en ce que** le pont (300) comprend en outre un système de verrouillage de pont (310) comprenant au moins une dent (311, 313) pour l'alignement et le verrouillage de la position angulaire d'au moins une griffe (100) par rapport au pont (300) une fois assemblée, la dent (311, 313) comprenant une saillie (314) à son extrémité adaptée pour venir en prise et verrouiller la position de la griffe (100), la griffe (100) comprenant en outre au moins une nervure (105) s'étendant longitudinalement entre la partie distale (120) et la partie proximale (110) et destinée à augmenter la résistance de la griffe (100), la griffe comprenant en outre un système de verrouillage de griffe (106) comprenant une dépression (107) sur l'au moins une nervure (105) qui convient pour mettre en prise et ajuster la dent (313) dans le pont (300) et destinée à verrouiller la position de la griffe (100) par rapport au pont (300), une fois assemblée.

2. Dispositif de montage (400) selon la revendication précédente, l'au moins une partie de fixation (301) comprenant une zone de serrage (303) pour fixer l'au moins une griffe (100) au pont, l'ouverture (302, 306, 307) de l'au moins une partie de fixation (301) étant adaptée de sorte que le système de contreventement (200) entre en contact avec le pont (300) sensiblement uniquement sur la zone de serrage (303) du pont lors de l'actionnement du système de contreventement (200).

3. Dispositif de montage (400) selon l'une quelconque des revendications précédentes, l'ouverture (302, 306, 307) étant en outre adaptée de sorte que l'au moins une griffe peut être ajustée au pont sans désaccoupler ou désarmer le système de contreventement (200).

4. Dispositif de montage (400) selon l'une quelconque des revendications précédentes, l'ouverture (302) étant une fente droite (306, 307) ou un trou de serrure (302) pour autoriser le passage d'au moins une partie d'un système de contreventement (200).

5. Dispositif de montage (400) selon l'une quelconque des revendications précédentes, l'au moins une griffe (100) comprenant une partie proximale (110) comprenant une partie de fixation (111) pour mettre en prise un système de contreventement (200) et à fixer la griffe (100) au pont (300), la partie de fixation (111) de la griffe comportant une fente ou un espace (115) qui convient pour ajuster de manière amovible le système de contreventement (200) dans une forme assemblée.

6. Dispositif de montage (400) selon l'une quelconque des revendications précédentes, l'au moins une griffe (100) comprenant deux bras allongés (101), chacun comprenant une partie proximale (110) et une partie distale (120) opposée comprenant un moyen d'ancrage (121), la griffe (100) comprenant un élément structural (102) s'étendant longitudinalement entre les bras (101) à l'écart de la partie proximale (110), et sur le côté du bras opposé au moyen d'ancrage (121).

7. Dispositif de montage (400) selon l'une quelconque des revendications précédentes, le système de contreventement (200) comprenant au moins un écrou de serrage (201), la partie de fixation (301) du pont (300) étant adaptée en taille et en forme de sorte que l'écrou de serrage (201) s'ajuste à l'intérieur de l'ouverture (302) de la partie de fixation (301).

8. Dispositif de montage (400) selon la revendication 7, l'au moins une griffe (100) et l'au moins un écrou (201) du système de contreventement (200) étant adaptés pour s'ajuster afin d'éviter la rotation de l'écrou (201).

9. Dispositif de montage (400) selon la revendication 8, l'au moins une griffe (100) comprenant une rainure longitudinale (104) et l'écrou de serrage (201) comprenant une protubérance (203) destinée à venir en prise avec et s'ajuster à la rainure longitudinale (104).

10. Dispositif de montage (400) selon l'une quelconque des revendications 1 à 8, l'au moins une griffe (100) comprenant au moins une nervure (105) comprenant en outre une rainure longitudinale (104), et le système de contreventement (200) comprenant un écrou de serrage (201) comprenant une protubérance (203) pour venir en prise avec et s'ajuster à la rainure longitudinale (104), la nervure (105) et la rainure (104) étant prévues sur des côtés opposés d'un même bras (101), et le profil de la nervure (105) du bras (101) étant complémentaire au profil de la rainure (104) dudit bras (101).

11. Dispositif de montage (400) selon l'une quelconque des revendications précédentes, la dépression (107, 108) de la griffe (100) étant dimensionnée pour s'ajuster au bord de la dent d'alignement (311, 313) du pont (300).
